# EUROPEAN PATENT APPLICATION

(11) **EP 1 727 361 A2**
(43) Date of publication of application: **29.11.2006**
(21) Application number: 06010950.1
(22) Date of filing: 26.05.2006
(51) Int. Cl.: H04N 5/44

(54) **Digital broadcasting reception terminal and method for processing digital broadcasting data using the same**

(30) Priority: 27.05.2005 KR 20050045058; 23.05.2006 KR 20060045916
(71) Applicant: Samsung Electronics Co., Ltd., Yeongtong-gu Suwon-si, Gyeonggi-do (KR)
(72) Inventor: Kwon, Seong-Geun, Yeongtong-gu Suwon-si Gyeonggi-do (KR); Joo, Jae-Il, Yeongtong-gu Suwon-si Gyeonggi-do (KR)
(74) Representative: Lang, Johannes

(57) **Abstract**

A digital broadcasting reception terminal and a digital broadcasting data processing method using the same can reduce the overhead increase of the operation system as well as the use of resources. The digital broadcasting reception terminal includes a digital broadcasting receiver for receiving digital broadcasting data; a demodulator for demodulating the received digital broadcasting data and outputting a reporting signal when the digital broadcasting data have been demodulated up to a preset capacity, wherein the reporting signal reports demodulation of the digital broadcasting data up to the preset capacity; and a control unit for reading and outputting the demodulated digital broadcasting data when the reporting signal has been output from the demodulator.

## Description

### BACKGROUND OF THE INVENTION

### 1. Field of the Invention

The present invention relates to digital broadcasting, and more particularly to a digital broadcasting reception terminal and a method for processing digital broadcasting data using the same.

### 2. Description of the Related Art

In general, digital broadcasting refers to broadcasting which provides users, in place of conventional analog broadcasting, with a service of a higher screen quality, a higher sound quality, and a higher service quality.

According to recent developments in digital broadcasting technology and mobile communication technology, increasing attention is being paid to a digital broadcasting service enabling users to view digital broadcasting while they are moving. In particular, more attention is being paid to the Digital Multimedia Broadcasting (DMB) service using a mobile communication terminal. The DMB service refers to a broadcasting service which enables a user to view various multimedia broadcasting through multiple channels by a receiver for a vehicle or a personal portable receiver equipped with a non-directional reception antenna, even while the user is moving.

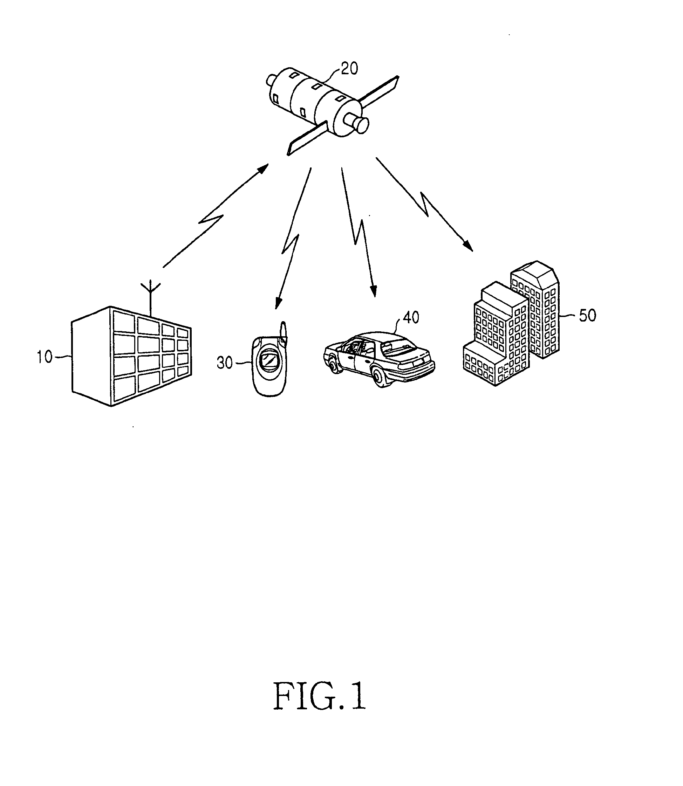

FIG. 1 illustrates an example of a structure of a system for implementing a digital broadcasting service.

Referring to FIG. 1, the system for implementing a digital broadcasting service includes a data sending center 10, a satellite 20, and reception devices (e.g. a mobile communication terminal 30, a receiver 40 for an automobile, a household receiver 50, etc.). The data sending center 10 compresses, modulates, and then transmits digital multimedia data (which includes image, voice, and data signals) to the satellite 20. The satellite 20 receives, amplifies, and frequency-converts the signal from the data sending center 10, and then transmits the converted signal back to the ground. The reception devices 30, 40, and 50 receive, demodulate, and decompress the signal from the satellite 20, and then output a restored original signal.

Due to rapid development in the digital broadcasting service technology as described above, a user can view clear digital broadcasting without noise even in a vehicle which moves at a high speed.

In order to implement the digital broadcasting reception function, the mobile communication terminal is equipped with a separate multimedia chip, e.g. a DM270 chip, in addition to a communication modem chip, e.g. a Mobile Station Modem (MSM), for controlling the mobile communication function. Therefore, in a mobile communication terminal equipped with the multimedia chip, the communication modem chip performs the mobile communication function while the multimedia chip performs the digital broadcasting reception function, so that it is nearly improbable that interference between two chips may occur.

A conventional method for processing the digital broadcasting data by the digital broadcasting reception terminal having two chips is as follows.

First, the digital broadcasting reception terminal receives and demodulates the digital broadcasting data. Second, the digital broadcasting reception terminal reads the demodulated digital broadcasting data according to a polling scheme and parses the data into audio and video data. Third, the digital broadcasting reception terminal outputs the parsed data through a display unit and a speaker.

Meanwhile, as seen in recent terminals equipped with a communication modem chip (e.g. MSM6550) which supports the digital broadcasting reception function, it has become unnecessary to mount a separate multimedia chip onto each terminal and has become possible to perform the mobile communication function and the digital broadcasting reception function using a single chip.

In the former terminals, the polling scheme has no big influence on the mobile communication function, because a separate multimedia chip is mounted in each of the terminals. However, according to the one-chip solution, that is, in a digital broadcasting reception terminal having a single chip (e.g. MSM6550), it is expected that use of a large amount of resources is necessary and overhead on the Operation System (OS) will thus increase in order to simultaneously perform the mobile communication function and the digital broadcasting reception function.

### SUMMARY OF THE INVENTION

Accordingly, the present invention has been made to solve the above-mentioned problems occurring in the prior art, and an object of the present invention is to provide a digital broadcasting reception terminal and a digital broadcasting data processing method using the same, which can reduce the overhead increase of the operation system as well as the use of resources.

It is another object of the present invention to provide a digital broadcasting reception terminal and a digital broadcasting data processing method using the same, which can receive and efficiently process digital broadcasting data.

In order to accomplish these and other objects, there is provided a digital broadcasting reception terminal including a digital broadcasting receiver for receiving digital broadcasting data; a demodulator for demodulating the received digital broadcasting data and outputting a reporting signal when the digital broadcasting data have been demodulated up to a preset capacity, wherein the reporting signal reports demodulation of the digital broadcasting data up to the preset capacity; and a control unit for reading and outputting the demodulated digital broadcasting data when the reporting signal has been output from the demodulator.

Preferably, the control unit includes a memory for storing the digital broadcasting data read from the demodulator, and a display unit and audio processor for outputting the parsed audio and video data.

In accordance with another aspect of the present invention, there is provided a method for processing digital broadcasting data by a digital broadcasting reception terminal, the method including receiving and demodulating digital broadcasting data; reading and storing the demodulated digital broadcasting data when the digital broadcasting data have been demodulated up to a preset capacity; and outputting the stored digital broadcasting data.

### BRIEF DESCRIPTION OF THE DRAWINGS

The above and other objects, features and advantages of the present invention will be more apparent from the following detailed description taken in conjunction with the accompanying drawings, in which:
FIG. 1 illustrates an example of a structure of a system for implementing a digital broadcasting service;
FIG. 2 is a block diagram illustrating a structure of a transmitter part of a typical digital broadcasting reception system;
FIG. 3 is a block diagram of a digital broadcasting reception terminal according to the present invention;
FIG. 4 is a more detailed block diagram illustrating several elements in the digital broadcasting reception terminal shown in FIG. 3; and
FIG. 5 is a flowchart illustrating an operation process of a digital broadcasting reception terminal according to the present invention.

### DETAILED DESCRIPTION OF THE PREFERRED EMBODIMENT

Hereinafter, preferred embodiments of the present invention will be described with reference to the accompanying drawings. In the following description, a detailed description of known functions and configurations incorporated herein will be omitted when it may make the subject matter of the present invention unclear.

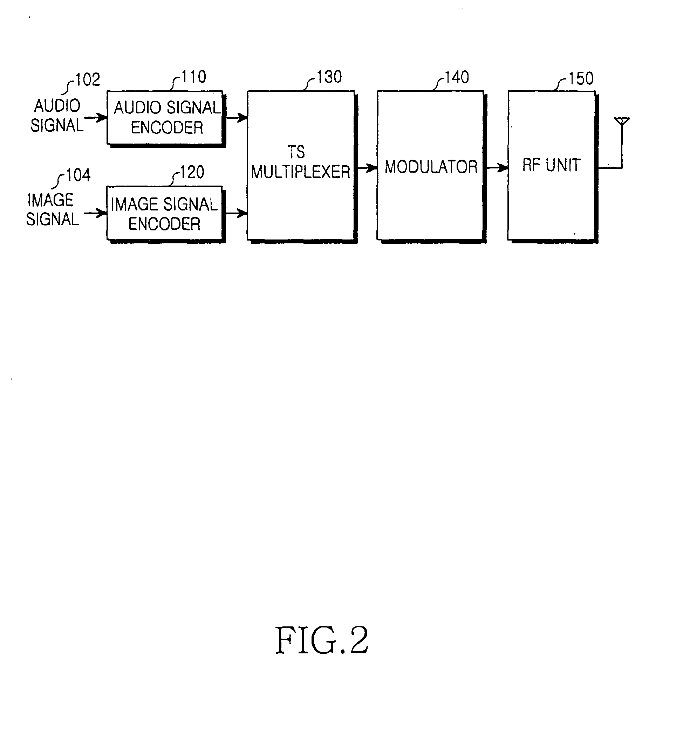

FIG. 2 is a block diagram illustrating a structure of a transmitter part of a typical digital broadcasting reception system.

The transmitter part of a typical digital broadcasting reception system includes an audio signal encoder 110, an image signal encoder 120, a Transport Stream (TS) multiplexer 130, a modulator 140, and a Radio Frequency (RF) unit 150. The audio signal encoder 110 encodes an input analog audio signal 102 into audio data and compresses the audio data. The image signal encoder 120 encodes an input analog image signal 104 into image data and compresses the image data.

The TS multiplexer 130 divides the digital audio data input from the audio signal encoder 110 and the digital image data input from the image signal encoder 120 in accordance with the TS packet size and then multiplexes the divided packets, so as to transmit the packets through transport channels. Usually, the TS packet has a size of 188 bytes.

The modulator 140 loads the TS packets input from the TS multiplexer 130 on sub-carriers. The RF unit 150 transmits an RF signal through an antenna including the TS packets modulated by the modulator 140.

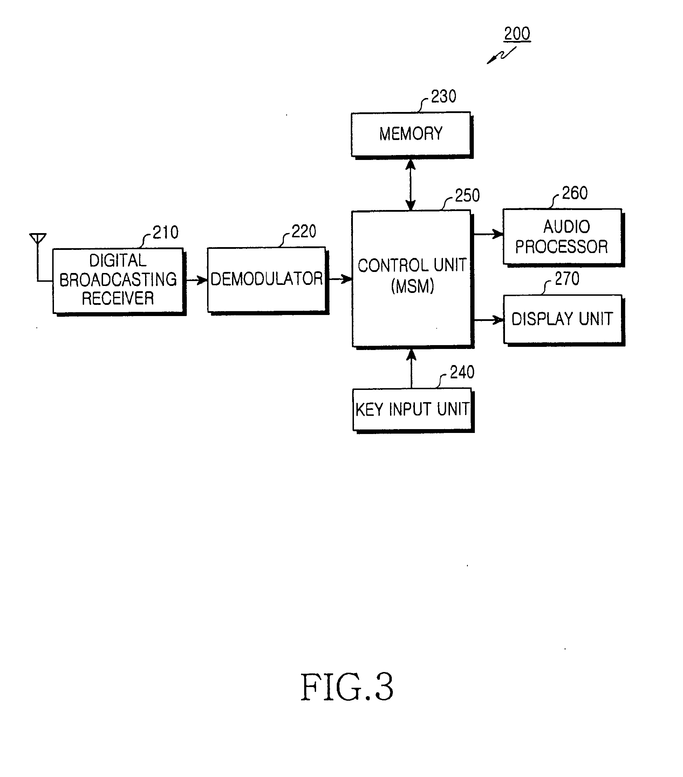

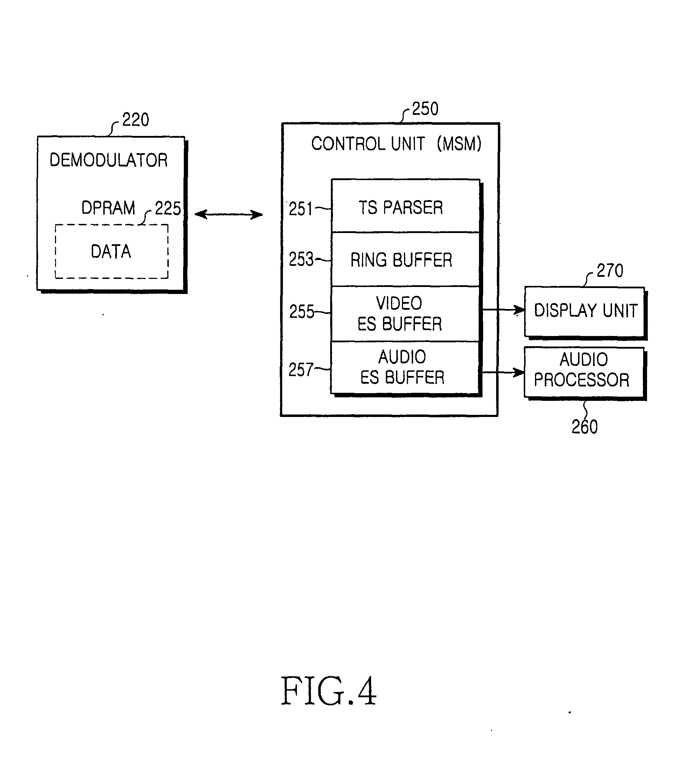

FIG. 3 is a block diagram of a digital broadcasting reception terminal according to the present invention, and FIG. 4 is a more detailed block diagram illustrating several elements in the digital broadcasting reception terminal shown in FIG. 3. It is assumed that the digital broadcasting reception terminal can perform both the digital broadcasting reception function and the mobile communication function. It is preferred that an MSM chip (which is a communication modem chip) controls the operation of a digital broadcasting reception terminal 200. Therefore, it is assumed in the present embodiment that the digital broadcasting reception terminal 200 is equipped with a communication modem chip (MSM 6550).

The digital broadcasting reception terminal 200 includes a digital broadcasting receiver 210, a demodulator 220, a memory 230, a key input unit 240, a control unit 250 (e.g. MSM 6550), an audio processor 260, and a display unit 270.

The digital broadcasting receiver 210 receives an RF signal (i.e. digital broadcasting data) transmitted from the transmitter part shown in FIG. 2 and transfers the received RF signal to the demodulator 220. The demodulator 220 removes the sub-carriers from the RF signal received from the digital broadcasting receiver 210 and demodulates it into a digital data stream. The demodulator 220 stores the demodulated digital data stream in a Dual Ported Random Access Memory (DPRAM) data area 225, shown in FIG. 4.

When the digital data stream has been demodulated up to a preset capacity, for example, when 12 TS packets (12*188 bytes) have been demodulated, the demodulator 220 outputs a reporting signal which reports the demodulation to the control unit 250. That is, when a preset amount of digital broadcasting data (i.e. digital data stream) has been stored in the DPRAM data area 225, the demodulator 220 outputs a reporting signal which reports the storage to the control unit 250.

Meanwhile, it should be noted that the preset capacity (for example, 12 packets) which serves as a condition for output of the reporting signal by the demodulator 220 is not fixed but is only an example with respect to the present invention.

The memory 230 stores various information necessary for control of operation of the digital broadcasting reception terminal 200. The key input unit 240 includes character keys, number keys, and various function keys and outputs a key input signal corresponding to a user's key input to the control unit 250.

The control unit 250 (e.g. MSM 6550) controls the general operation of the digital broadcasting reception terminal 200. The control unit 250 includes a TS parser 251, a ring buffer 253, a video Element Stream (ES) buffer 255, and an audio ES buffer 257, as shown in FIG. 4.

When receiving the reporting signal from the demodulator 220, the control unit 250 reads the digital broadcasting data stored in the DPRAM data area 225 of the demodulator 220 and stores the read data in the ring buffer 253. The ring buffer 253 may be included in the memory 230. The larger the capacity of the ring buffer 253, the larger the preset capacity (for example, 12 packets) which serves as a condition for output of the reporting signal by the demodulator 220 may become.

The TS parser 251 parses the digital broadcasting data stored in the ring buffer 253 into audio and image (i.e. video) data, and the parsed audio and image data are output by the audio processor 260 and the display unit 270 after passing through the audio ES buffer 257 and the video ES buffer 255.

Meanwhile, when the system is unstable, the demodulator 220 may fail to output the reporting signal in spite of the existence of demodulated data. For this case, it is preferable to read demodulated digital broadcasting data and store the read data in the ring buffer 253 after a predetermined period.

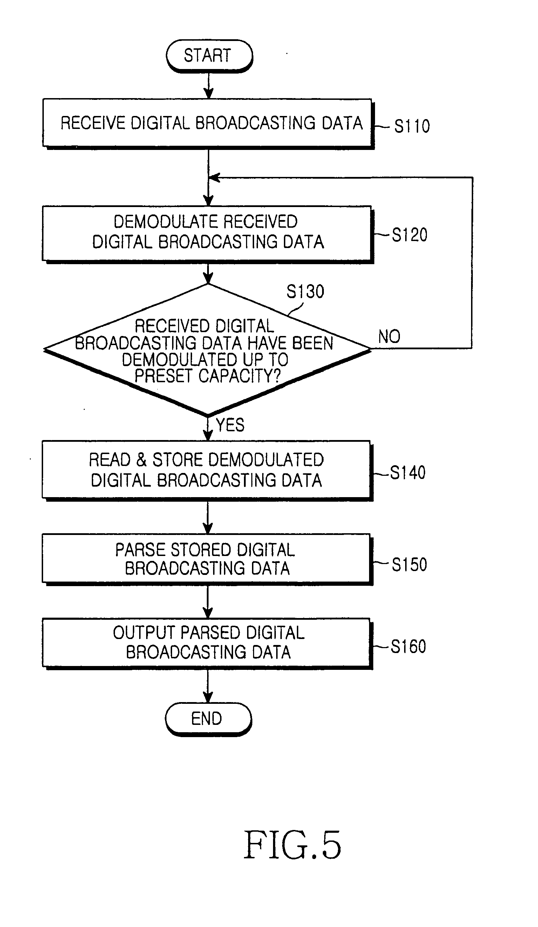

FIG. 5 is a flowchart illustrating an operation process of a digital broadcasting reception terminal according to the present invention.

Referring to FIGs. 3 to 5, the control unit 250 receives an RF signal containing digital broadcasting data through the digital broadcasting receiver 210 (step S110).

The demodulator 220 removes the sub-carriers from the received RF signal from the digital broadcasting receiver 210 and demodulates it into a digital data stream (step S120). Then, the demodulator 220 stores the demodulated digital data stream at the DPRAM data area 225.

The control unit 250 determines if the received digital data have been demodulated up to a preset capacity, e.g. 12 packets (step S130). Simultaneously, the control unit 250 checks if a reporting signal is output from the demodulator 220. As a result, it is possible to prevent the control unit 250 from unnecessarily checking the state of the DPRAM in order to read the digital broadcasting data particularly even when there is no demodulated digital broadcasting data in the DPRAM data area 225 of the demodulator 220. The reporting signal is a signal which reports that the digital broadcasting data have been stored up to a preset capacity in the DPRAM data area of the demodulator 220.

When the reporting signal is output from the demodulator 220, the control unit 250 determines that the digital broadcasting data have been stored up to a preset capacity, reads the demodulated digital broadcasting data from the DPRAM data area 225, and stores the read data in the ring buffer 253 (step S140).

For the case where the demodulator 220 fails to output the reporting signal in spite of the existence of demodulated data, the control unit 250 may read demodulated digital broadcasting data and store the read data in the ring buffer 253 after a predetermined period.

The control unit 250 parses the digital broadcasting data stored in the ring buffer 253 into audio data and video data (step S 150). The control unit 250 decodes the parsed digital broadcasting data (that is, the audio data and the video data) into an analog audio signal and an analog video signal, and outputs the decoded signals through the audio processor 260 and the display unit 270.

According to the present invention as described above, it is possible to reduce the increase in overhead on the operation system as well as the use of resources when a digital multimedia broadcasting reception terminal without a separate multimedia chip receives and processes digital broadcasting data.

While the invention has been shown and described with reference to certain preferred embodiments thereof, specifically to a digital broadcasting reception terminal capable of performing a mobile communication function and a digital broadcasting reception function, it will be understood by those skilled in the art that various changes in form and details may be made therein without departing from the spirit and scope of the invention as defined by the appended claims.

## Claims

1. A digital broadcasting reception terminal comprising:
a digital broadcasting receiver for receiving digital broadcasting data;
a demodulator for demodulating the received digital broadcasting data and
outputting a reporting signal when the digital broadcasting data have been demodulated up to a preset capacity, wherein the reporting signal reports demodulation of the digital broadcasting data up to the preset capacity; and
a control unit for reading and outputting the demodulated digital broadcasting data when the reporting signal has been output from the demodulator.

2. The digital broadcasting reception terminal as claimed in claim 1, wherein the control unit includes a ring buffer for storing the digital broadcasting data read from the demodulator.

3. The digital broadcasting reception terminal as claimed in claim 2, wherein, the larger the preset capacity of the ring buffer, the larger the capacity of the demodulated digital broadcasting data.

4. The digital broadcasting reception terminal as claimed in claim 1, wherein the control unit reads the demodulated digital broadcasting data after a predetermined period, for a case where the demodulator fails to output the reporting signal in spite of the existence of demodulated data.

5. A method for processing digital broadcasting data by a digital broadcasting reception terminal, the method comprising the steps of:
receiving and demodulating digital broadcasting data;
reading and storing the demodulated digital broadcasting data when the digital broadcasting data have been demodulated up to a preset capacity;
and
outputting the stored digital broadcasting data.

6. The method as claimed in claim 5, wherein, in the step of reading and storing the demodulated digital broadcasting data, the demodulated digital broadcasting data are read and stored when a reporting signal, which reports demodulation of the digital broadcasting data up to the preset capacity, is output.

7. The method as claimed in claim 6, wherein, in the step of reading and storing the demodulated digital broadcasting data, the demodulated digital broadcasting data are read and stored, for a case where the reporting signal fails to be output in spite of the existence of demodulated data.
